# EUROPÄISCHE PATENTSCHRIFT

(11) **EP 0 972 665 B1**
(45) Veröffentlichungstag und Bekanntmachung des Hinweises auf die Patenterteilung: **13.11.2002**
(21) Anmeldenummer: 99112655.8
(22) Anmeldetag: 02.07.1999
(51) Int. Cl.: B60J 7/185

(54) **Verschliessvorrichtung für ein Schliessbauteil eines Fahrzeugs**
Locking device for a closing component of a vehicle
Dispositif pour le verrouillage d'un élément de fermeture d'un véhicule

(30) Priorität: 15.07.1998 DE 29812602 U
(43) Veröffentlichungstag der Anmeldung: 19.01.2000
(73) Patentinhaber: ISE Industries GmbH, 58455 Witten (DE)
(72) Erfinder: Plesternings, Frank, 44269 Dortmund (DE)
(74) Vertreter: Patentanwälte Wenzel & Kalkoff

(56) Entgegenhaltungen:
- DE-U- 9 407 380
- US-A- 3 089 719
- US-A- 4 830 425
- US-A- 5 772 275

## Beschreibung

Die Erfindung betrifft eine Verschließvorrichtung für ein Schließbauteil eines Fahrzeugs, insbesondere für das Cabriolet-Verdeck eines Kraftfahrzeuges, die aufweist:
- mindestens einen Antriebsmotor, vorzugsweise einen Elektromotor, für die Betätigung der Verschließvorrichtung,
- ein Getriebe, das vorzugsweise mit dem Antriebsmotor in baulicher Einheit ausgeführt ist, das mit dem Antriebsmotor in Verbindung steht,
- einen im wesentlichen kreisrunden Drehkranz, der mit dem Getriebe in Verbindung steht und von diesem in beiden Drehrichtungen um seine Mittelachse gedreht werden kann,
- ein Trägerblech, das zumindest den Drehkranz trägt,
- mindestens eine Zug- und Druckstange, die mit ihrem einen Ende an dem Drehkranz gelenkig gelagert ist, und
- mindestens einen Fanghaken, der mit dem anderen Ende der Zug- und Druckstange in Verbindung steht und der in eine Öse zwecks Verriegelung eingreifen kann.

Verschließvorrichtungen dieser und ähnlicher Art sind bekannt und dienen vorzugsweise zum Verriegeln und Entriegeln von Schließbauteilen, nämlich beweglichen Dächern von Fahrzeugen.

Die DE 39 24 295 C1 offenbart demgegenüber eine hydraulisch betätigbare Zuzieheinrichtung für ein Cabriolet-Verdeck, das in seiner Schließlage mit einem Gegenbauteil verriegelt ist. Es hat einen an einem der Bauteile angeordneten Verschluß, der bei geöffnetem Verdeck in einer Freigabestellung gehalten ist, sowie einen am anderen Bauteil angeordneten Schloßzapfen, der infolge des Schließvorschubes des Verdecks mit dem Verschluß zusammenwirkt. Weiterhin hat es einen hydraulischen Antrieb für den Verschluß, durch den der vom Verschluß erfaßte Schloßzapfen aus einer vorverriegelten Ausgangsstellung in seine vollständig verriegelte Endlage gezogen ist, wobei die vom Schloßzapfen durchsetzte Eintauchöffnung des Verschlusses von einer den auflaufenden Schloßzapfen zentrierenden Vertiefung eingefaßt ist.

Hierfür können anstelle hydraulischer Antriebe zur Verriegelung der Schloßzapfen auch mechanische Gestängeantriebe mit Druck- und Zugstangen und eine Verschließvorrichtung der eingangs gennanten Art verwendet werden.

Eine Verschließvorrichtung der eingangs gennanten Art ist der US 3,089,719 als bekannt zu entnehmen.

Herzstück dieser Verschließvorrichtung ist ein Drehkranz der durch seine Drehbewegung zwei Zug- und Druckstangen verschiebt, die drehgelenkig an der Oberseite des Drehkreuzes angebracht sind. Diese Stangen betätigen wiederum zugehörige Fanghaken, die in entsprechende Ösen eingreifen und so das Verdeck verriegeln. Der Drehkranz selber ist gleichzeitig als Zahnrad ausgebildet und am Ausgang des Getriebes gelagert, das über eine kupplung mit dem Antriebsmotor verbunden ist.

Da der Verriegelungsvorgang nie völlig symmetrisch abläuft, ergeben sich Querkräfte, die dazu führen, daß erhebliche Kräfte auf die Getriebelagerung wirken. Diese Lagerung muß daher entsprechend dimensioniert werden, was die Verschließvorrichtung verteuert.

Weiterhin ist der auf engstem Raum, nämlich in der Dachspitze des Verdecks, unterzubringende bekannte Mechanismus der Verschließvorrichtung aufwendig ausgeführt, wodurch hohe Fertigungs- und Montagekosten entstehen.

Schließlich bringt die Vielzahl der benötigten Bauteile auch die Gefahr mit sich, daß es zu einem Versagen der Verschließvorrichtung kommt, nachdem sie im Kraftfahrzeug hoher Belastung sowie Erschütterungen ausgesetzt ist.

Der Erfindung liegt daher die **Aufgabe** zugrunde, eine verbesserte Verschließvorrichtung der gattungsgemäßen Art zu schaffen. Insbesondere soll der konstruktive Aufwand deutlich reduziert werden, so daß die Konstruktion einfacher herzustellen und zu montieren ist. Damit sollen primär Herstellungskosten eingespart werden.

Die **Lösung** dieser Aufgabe durch die Erfindung ist dadurch gekennzeichnet, daß
- das Trägerblech eine Bohrung zur Aufnahme des Drehkranzes an seinem äußeren Umfang und zu dessen radialer Lagerung aufweist, wobei der Durchmesser der Bohrung dem Außendurchmesser des Drehkranzes angepaßt ist, und
- daß der Drehkranz aus zwei Teilkränzen besteht, die miteinander fest verbunden sind,
- wobei der erste Teilkranz eine derartige Form hat, daß er einerseits zwecks radialer Führung des Drehkranzes an die Innenseite der Bohrung des Trägerblechs angrenzt und andererseits zwecks axialer Führung des Drehkranzes an der einen Seite des Trägerblechs anliegt, und
- wobei der zweite Teilkranz eine im wesentlichen scheibenförmige Gestalt hat und dieser zwecks axialer Führung des Drehkranzes an der anderen Seite des Trägerblechs anliegt.

Mit dieser Ausbildung ist es möglich, daß das Trägerblech - im Zusammenwirken mit dem entsprechend geformten Drehkranz - direkt als Lagerung für den Drehkranz fungiert. Folglich werden alle entstehenden Querkräfte, die von den Zug- und Druckstangen stammen, direkt vom Trägerblech aufgenommen und abgeleitet, so daß der Getriebeausgang völlig frei von Querkräften gehalten wird. Weiterhin ergibt sich eine einfache Bauform, die fertigungstechnisch leicht hergestellt werden kann und somit preiswert ist. Insbesondere entfällt die Notwendigkeit, stark dimensionierte Getriebelager einsetzen zu müssen. Insgesamt wird ein einfacher und stabiler Aufbau mit relativ wenig beweglichen Teilen erreicht, so daß die Betriebssicherheit hoch ist.

Gemäß einer ersten Weiterbildung ist vorgesehen, daß im Bohrungsbereich zwischen dem Trägerblech und dem Drehkranz ein ringförmiges Gleitlagerelement angeordnet ist. Dieses Element kann aus hochabriebfestem Kunststoffmaterial bestehen.

Nach einer vorteilhaften Weiterbildung der Erfindung weist das Gleitlagerelement einen im wesentlichen U-förmigen Querschnitt auf. Der U-förmige Querschnitt gewährleistet eine linienförmige Berührung zwischen der Ober- und Unterkante der kreisrunden Bohrung des Trägerblechs und den Innenseiten des Gleitlagerelements, wodurch ein Verklemmen zwischen dem Gleitlagerelement und dem Trägerblech möglich wird, so daß auf zusätzliche Befestigungselemente verzichtet werden kann.

Die Verbindung zwischen Getriebe und Drehkranz zur Übertragung der Drehbewegung und des Drehmoments besteht vorzugsweise aus einem formschlüssigen Kupplungselement. Dabei ist insbesondere ein Vielkeilprofilstift oder ein ähnliches Maschinenelement vorgesehen.

Im Hinblick auf einen Notbetrieb bei Ausfall des Antriebsmotors kann besonders vorteilhaft vorgesehen werden, daß das formschlüssige Kupplungselement für eine Handbetätigung des Drehkranzes mittels eines Hilfswerkzeuges axial verschieblich ist, wobei ein Federelement derart angeordnet ist, daß die axiale Verschiebung gegen eine Federkraft erfolgt, die eine Rücktellkraft bewirkt. Das Federelement kann vorzugsweise im Bereich des der anderen Seite des Trägerblechs abgewandten Seite des Trägerblechs angeordnet sein. Das Kupplungselement kann in Richtung seiner axialen Verschiebung im Getriebe geführt werden.

Grundsätzlich kann das Federlement in direktem Kontakt mit dem Kupplungselement stehen. Nach einer vorteilhaften Weiterbildung der Erfindung liegt das Federelement unter Zwischenschaltung einer Kugel an der dem Trägerblech abgewandten Seite des Kupplungselements an. Die Kugel bewirkt ein Entkoppeln der Feder von Drehbewegungen des Kupplungselements. Dadurch werden Störgeräusche vermieden, die durch ein unerwünschtes Verdrehen der Feder auftreten können. Ein Verrutschen der Kugel kann durch eine entsprechende Führung im Getriebe vermieden werden.

Vorteilhafterweise ist das Kupplungselement derart ausgebildet, daß das Hilfswerkzeug zum axialen Verschieben des Kupplungselements auf dessen im Bereich des Drehkranzes angeordnetes Ende aufsetzbar und zur Übertragung eines Drehmoments auf den Drehkranz mit diesem in Eingriff bringbar ist. Eine derartige Ausbildung des Kupplungselements erleichtert das Aufsetzen des Hilfswerkzeugs auf das Kupplungselement, wodurch eine zügige Betätigung der Verschließvorrichtung mittels des Hilfswerkzeuges gewährleistet werden kann.

Um im Notbetrieb eine schnelle Verbindung zwischen dem Kupplungselement und dem Hilfswerkzeug zu erreichen, kann besonders vorteilhaft vorgesehen werden, daß das im Bereich des Drehkranzes angeordnete Ende des Kupplungselements eine Bohrung aufweist, die mit einem im Kontaktbereich des Hilfswerkzeuges vorstehenden Zapfen in Eingriff bringbar ist. Diese Verbindungsart verhindert zuverlässig ein Abrutschen des Hilfswerkzeugs von dem Kupplungselement während der Betätigung der Verschließvorrichtung.

Grundsätzlich ist die Wahl des Querschnitts des vorderen Endes des Hilfswerkzeuges frei wählbar, sofern damit eine Drehmomentübertragung auf den Drehkranz erreicht werden kann. Nach einer vorteilhaften Weiterbildung der Erfindung entspricht der Querschnitt des vorderen Endes des Hilfswerkzeuges im wesentlichen dem Querschnitt des Kupplungselements. Ein derartiges Hilfswerkzeug nutzt die zwischen Drehkranz und Kupplungselement optimierte Form zur Drehmomentübertragung. Eine Zerstörung der Öffnung für das Kupplungselement durch ein andersartig gestaltetes Hilfswerkzeug, das beispielsweise nur punktuell an Seitenflächen der Öffnung angreift, wird somit vermieden.

Nach einer vorteilhaften Weiterbildung der Erfindung ist das Hilfswerkzeug an seinem vorderen Ende für eine Führung innerhalb der Öffnung für das Kupplungselement in dem Drehkranz zylindrisch ausgebildet und mit einem senkrecht zur Zylinderachse, nämlich quer durch den Zylinder verlaufenden Zapfen versehen, wobei die Zapfenenden an beiden Seiten des Zylinders vorstehen sowie in der Öffnung des Drehkranzes einander gegenüberliegende Aussparungen für den Durchgang der vorstehenden Zapfenenden ausgebildet sind. Die Drehmomentübertragung erfolgt in diesem Ausführungsbeispiel nicht über die Mantelfläche des Hilfswerkzeugs, sondern über die am Hilfswerkzeug auf beiden Seiten vorstehenden Zapfenenden, die mit entsprechenden Anschlägen in Eingriff bringbar sind.

Nach einer vorteilhaften Weiterbildung der Erfindung sind diese Zapfenenden des quer durch den Zylinder vorlaufenden Zapfen mit auf der dem Getriebe zugewandten Seite des Drehkranzes angeordneten Anschlägen in Eingriff bringbar. Über die Anschläge können neben dem Drehmoment auch Handkräfte in axialer Richtung des Kupplungselements übertragen werden, wodurch eine Ein-Hand-Betätigung der Verschließvorrichtung mittels des Hilfswerkzeuges möglich wird. D.h. es können axiale Kräfte in zwei Richtungen, nämlich zusätzlich eine Zugkraft auf den Drehkranz ausgeübt werden. Die Anschläge können dabei vorzugsweise paarweise angeordnet sein, so daß eine Drehmomentübertragung in beide Drehrichtungen gewährleistet ist. Die beschriebene Anordnung kann zudem ein unerwünschtes Herausfallen des Hilfswerkzeugs verhindern.

Zum vollautomatischen Betrieb der Verschließvorrichtung ist vorgesehen, daß der Drehkranz am äußeren Rand einen nach außen vorstehenden nasenförmigen Fortsatz od. dgl. aufweist, der am Ende der Drehbewegung des Drehkreuzes beim Verriegeln der Verschließvorrichtung mit einem von zwei von dem Trägerblech vorstehenden Anschlägen und am Ende einer entgegengesetzten Drehbewegung mit dem anderen der von dem Trägerblech vorstehenden Anschläge in Eingriff kommt.
Der Fortsatz ist dazu geeignet, End- oder Mikroschalter zu betätigen, die den Antriebsmotor abschalten, wenn der Fortsatz den betreffenden Anschlag erreicht und damit die jeweilige Endpositon der Drehbewegung des Drehkranzes beim Verriegeln und beim Entriegeln der Verschließvorrichtung erreicht ist.

Beim Einsatz von zwei Zug- und Druckstangen, die symmetrisch arbeiten, ist es vorteilhaft, daß der Drehkranz zwei um 180° gegeneinander versetzte Lagerpunkte für je eine Zug- und Druckstange aufweist.'Die Zug- und Druckstangen sind dabei vorzugsweise an den Lagerpunkten gelenkig angelenkt.

Schließlich kann vorgesehen sein, daß die Drehachse des Antriebsmotors und die Drehachse des Drehkranzes senkrecht zueinander stehen.

In der Zeichnung ist ein Ausführungsbeispiel der Erfindung dargestellt:
- Fig. 1: zeigt eine perspektivische Ansicht einer Motor-Getriebe-Drehkranz-Einheit einer Verschließvorrichtung mit abgenommenem zweiten Teilkranz,
- Fig. 2: stellt dieselbe Ansicht Motor-Getriebe-Drehkranz-Einheit mit vollständig montiertem Drehkranz dar, in
- Fig. 3: ist eine ähnliche perspektivische Ansicht wie in den Figuren 1 und 2 zu sehen, jedoch mit komplett montierten Zug- und Druckstangen,
- Fig. 4: zeigt eine Draufsicht einer Hälfte der Verschließvorrichtung,
- Fig. 5: stellt eine perspektivische Explosionsansicht eines Trägerblechs, des Drehkranzes und eines Gleitlagerelements dar, in
- Fig. 6: ist eine perspektivische Explosionsansicht eines Vielkeilprofilstifts, einer vorspannenden Feder sowie eines vorderen Bereichs eines Hilfswerkzeuges zu sehen.

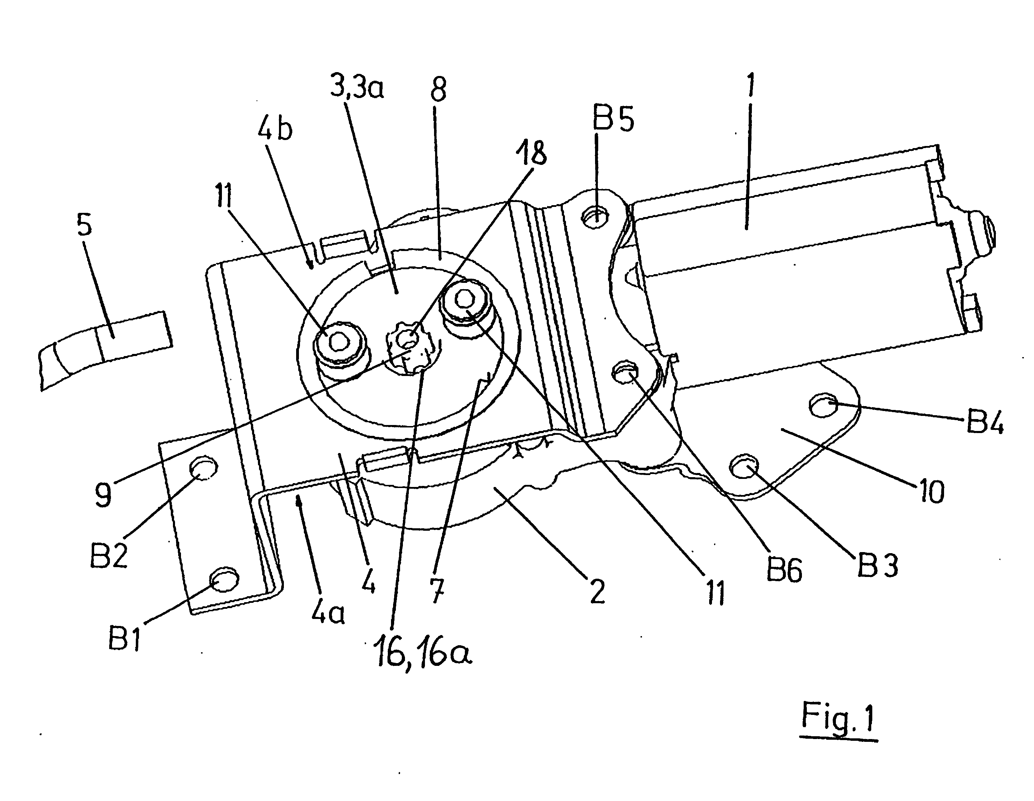

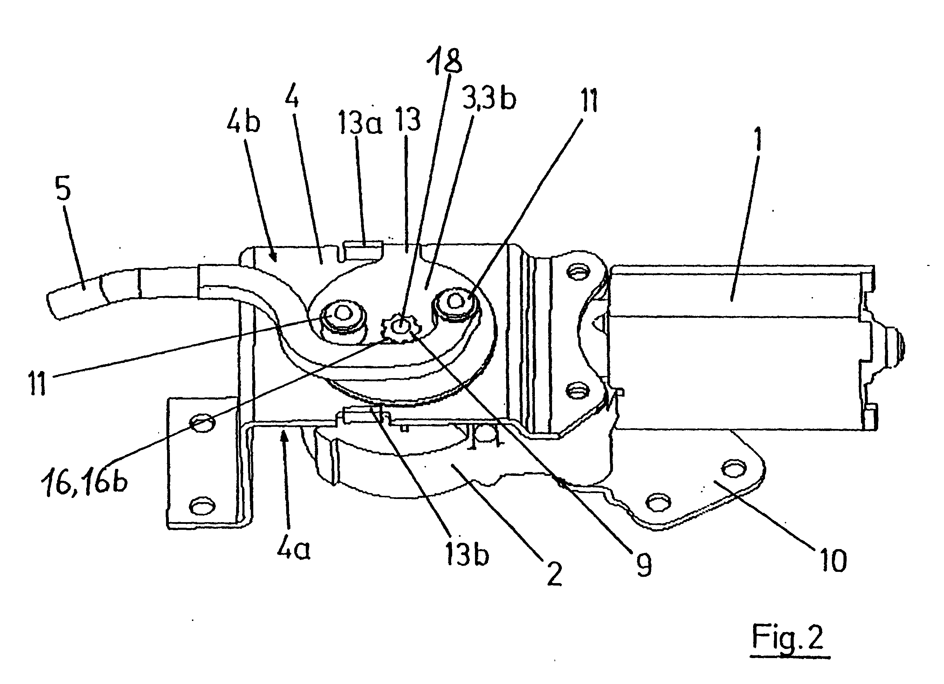

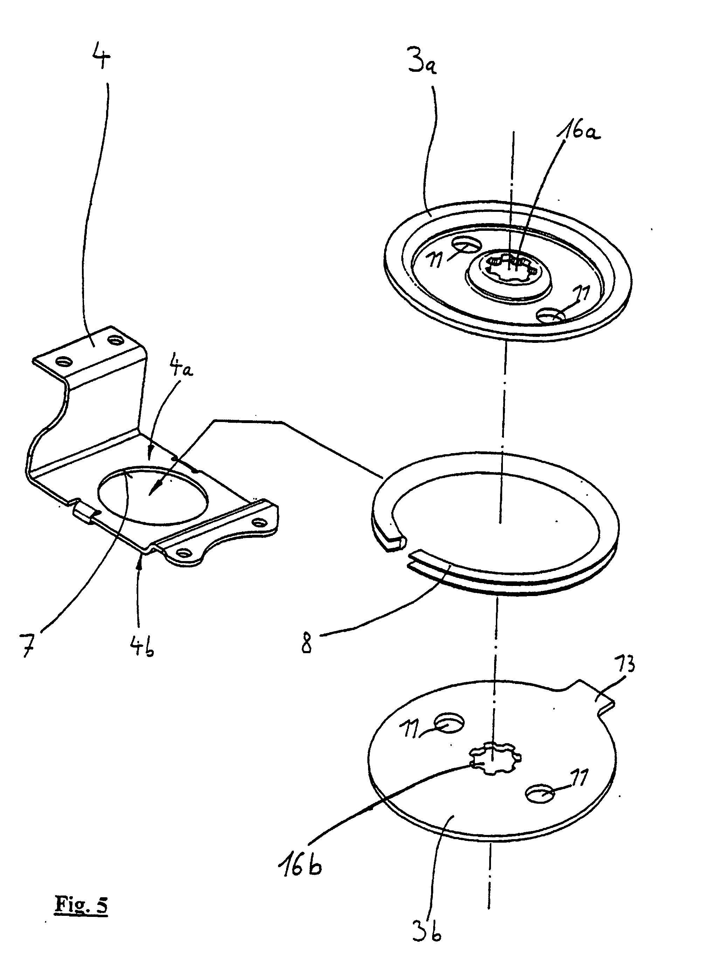

In Fig. 1 ist eine perspektivische Ansicht einer Motor-Getriebe-Drehkranz- Einheit einer Verschließvorrichtung mit abgenommenem ersten Teilkranz 3b (vgl. Fig. 2) eines aus dem Teilkranz 3b und einem damit fest verbundenen Teilkranz 3a bestehenden Drehkranzes (vgl. Fig. 2) dargestellt. Ein Antriebsmotor 1 ist mit einem Getriebe 2 in baulicher Einheit ausgeführt. Diese Motor-Getriebe-Einheit ist durch nicht dargestellte Schrauben auf der einen Seite mit einem Trägerblech 4 (Bohrungen B5, B6) und auf der anderen Seite mit einem Halteblech 10 verbunden. Das Trägerblech 4 hat eine kreisrunde Bohrung 7, in die ein Gleitlagerelement 8 (vgl. auch Fig. 5) eingesetzt ist. Das Gleitlagerelement 8 versieht das Trägerblech 4 im Bereich der Bohrung 7 sowohl mit einer radialen als auch mit einer beidseitigen axialen Lagerfläche für den sich in der Bohrung 7 befindlichen ersten Teilkranz 3a. Der erste Teilkranz 3a ist - wie später noch im Detail zu sehen sein wird - tiefgezogen ausgeführt, so daß er sowohl eine radiale als auch eine axiale Anlagefläche für die Positionierung des Teilkranzes 3a in der Bohrung 7 bildet. Das Zentrum des ersten Teilkranzes 3a weist eine Öffnung 16a auf, die mit einer zentrischen Öffnung 16b des zweiten Teilkranzes 3b eine Öffnung 16 des Drehkranzes 3 bildet.

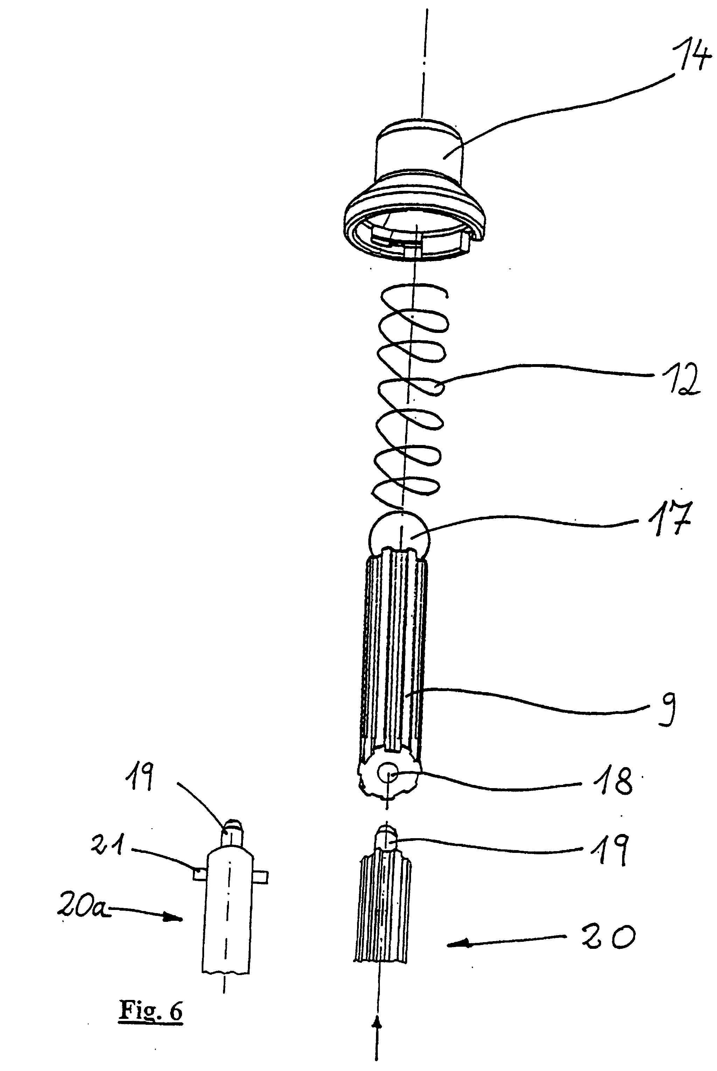

Ein formschlüssiges Kupplungselement in Gestalt eines Vielkeilprofilstifts 9 (vgl. Fig. 6) dient zur Übertragung der Drehbewegung vom Getriebe 2 her auf den Drehkranz 3; in der Fig. 1 ist zu sehen, wie das Ende des Vielkeilprofils durch die Öffnung 16b im Zentrum des ersten Teilkranzes 3a. hindurchtritt. Der Drehkranz 3 weist weiterhin zwei Lagerpunkte 11 für die Zugund Druckstangen 5 auf, von denen eine abgeschnitten dargestellt ist (Fig. 2). Die Motor-Getriebe-Drehkranz-Einheit wird mit nicht dargestellten Schrauben über das Trägerblech 4 (zwei Bohrungen B1, B2 für die Schrauben) und über das Halteblech 10 (Bohrungen B3, B4) mit der Dachspitze des Cabriolet-Verdecks verschraubt bzw. vernietet.

In Fig. 2 ist dieselbe Ansicht wie in Fig. 1 zu sehen, jedoch ist jetzt der Drehkranz 3 vollständig montiert, nämlich auch mit den zweiten Teilkranz 3b versehen und es ist eine Zug- und Druckstange 5 angelenkt. Vom Vielkeilprofilstift 9 ist jetzt nur noch das Ende zu sehen, das eine Bohrung 18 aufweist. Zu erkennen ist auch, daß der zweite Teilkranz 3b einen Fortsatz 13 aufweist. Diese "Nase" kommt am Ende der Drehbewegung des Drehkranzes 3 beim Verriegeln mit einem Anschlag 13a und am Ende der entgegengesetzten Drehbewegung mit einem weiteren Anschlag 13b in Eingriff und ist so ausgeführt, daß zwei nicht dargestellte Endschalter bzw. Mikroschalter mit dem Fortsatz 13 betätigt werden können. So kann der Antriebsmotor 1 automatisch betrieben werden: Er läuft beim Verriegeln eines Cabriolet-Verdecks bzw. der Verschließvorrichtung so lange, bis der Fortsatz 13 den Anschlag 13a erreicht und der Antriebsmotor 1 durch Betätigung des Mikroschalters abgeschaltet wird; entsprechend läuft der Antriebsmotor 1 beim Entriegeln des Verdecks in die entgegengesetzte Richtung so lange, bis der Fortsatz 13 einen zweiten Mikroschalter betätigt. Die Anschläge 13a und 13b sichern die Endstellungen des Drehkranzes 3 sowohl bei Motor- als auch bei Handbetätigung des Drehkranzes 3.

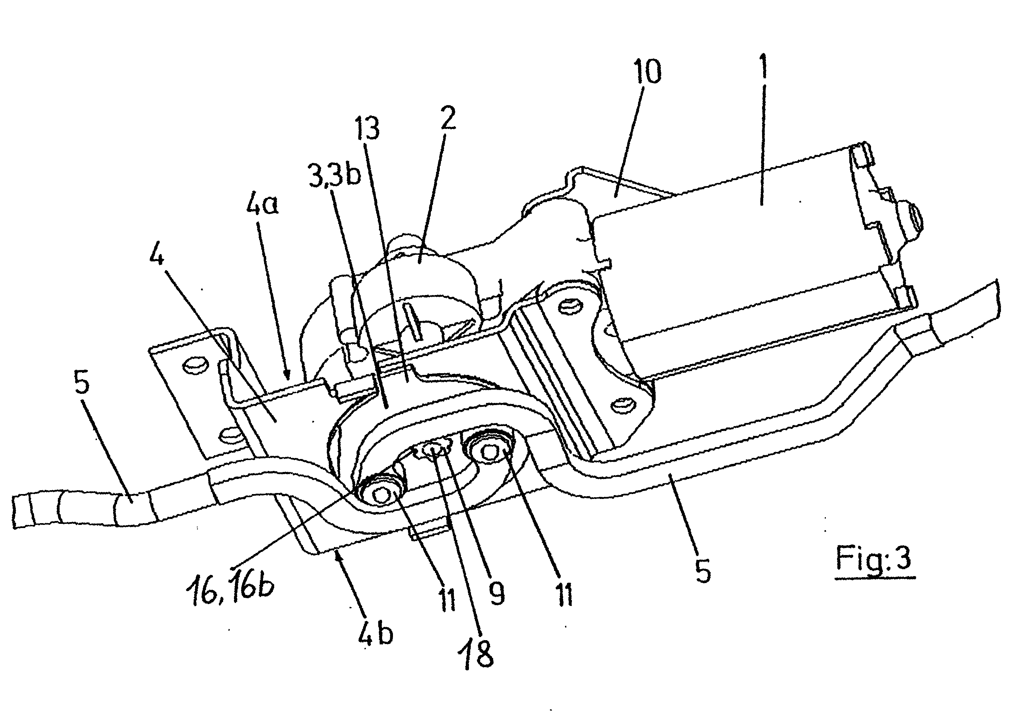

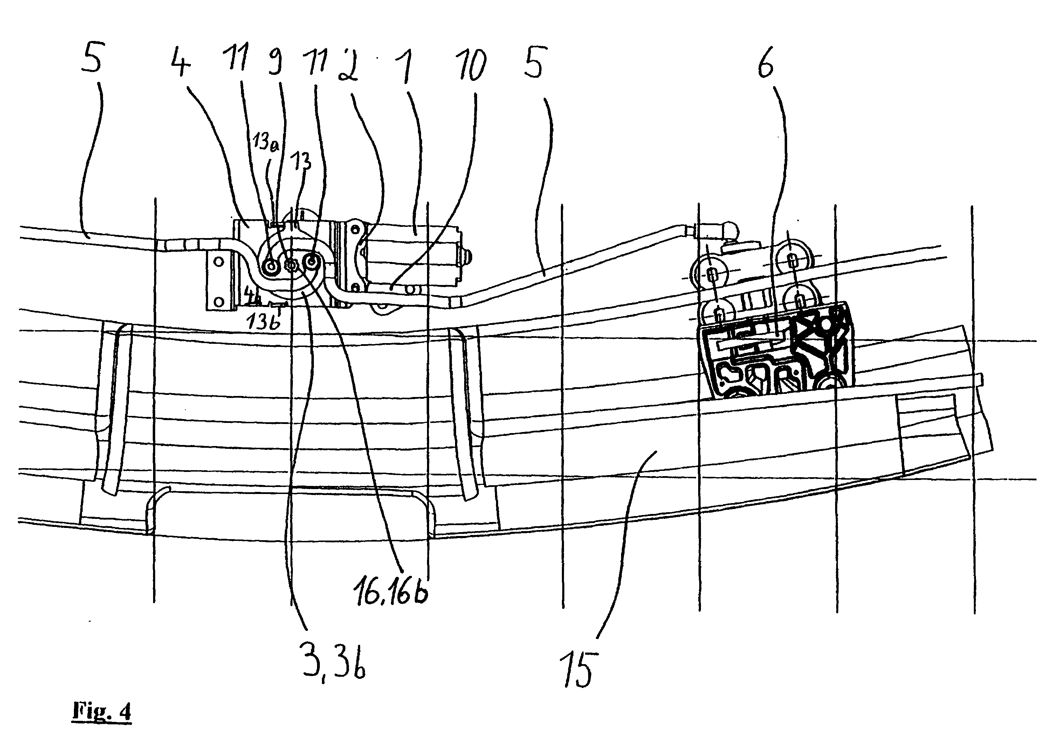

In Fig. 3 ist die komplett montierte Motor-Getriebe-Drehkranz-Einheit zu sehen, wobei nunmehr zwei Zug- und Druckstangen 5 angelenkt sind, die spiegelsymmetrisch angeordnet sind und zwei Fanghaken 6 betätigen (vgl. Fig. 4).

In Fig. 4 ist eine Halfte der Verschließvorrichtung zu sehen, die im wesentlichen symmetrisch ausgebildet ist, so daß der Bildausschnitt zum Verständnis ausreicht.

Die Motor-Getriebe-Drehkranz-Einheit befindet sich in der Mitte einer Dachspitze 15 des Cabriolet-Verdecks. Von dort aus erstrecken sich weitgehend symmetrisch die Zug- und Druckstangen 5 - eine nach links (nur teilweise zu sehen) und eine nach rechts (vollständig dargestellt). Die Zug- und Druckstangen 5 sind jeweils mit ihrem einen Ende gelenkig am Drehkranz 3 angelenkt. Mit ihrem anderen Ende sind sie mit einem Getriebeelement verbunden, das die Fanghaken 6 in bekannter Weise betätigt.

Der Aufbau des Drehkranzes 3 ist in Fig. 5 in auseinandergezogener Darstellung zu erkennen. Der Drehkranz 3 besteht aus den beiden Teilkränzen 3a und 3b, die bei der Montage fest miteinander verbunden werden (z. B. vernietet). Der Teilkranz 3a ist tiefgezogen, so daß er eine Stufe aufweist. Diese Stufe bildet einerseits eine radiale Führung in der Bohrung 7 des Trägerblechs 4 und andererseits eine axiale Führung an der einen Seite 4a des Trägerblechs 4. Der Teilkranz 3b hat im wesentlichen eine ebene scheibenförmige Gestalt. Der Durchmesser des Teilkranzes 3b ist so gehalten, daß er eine axiale Führung an der anderen Seite 4b des Trägerblechs 4 ermöglicht. Durch die feste Verbindung beider Teilkränze 3a, 3b zum Drehkranz 3 bei der Montage ergibt sich eine exakte Führung des Drehkranzes 3 im Trägerblech 4. Um eine verschleißarme und leichtgängige Lagerung des Drehkranzes 3 zu erreichen, ist das Gleitlagerelement 8 in die Bohrung 7 eingesetzt, das aus verschleißresistentem Kunststoff besteht. Wie oben bereits beschrieben ist, bilden die beiden Öffnungen 16a und 16b der Teilkränze 3a, 3b die gemeinsame Öffnung 16 des Drehkranzes 3, über die das Drehmoment vor dem als Kupplungselement wirkenden Vielkeilprofilstift 9 auf den Drehkranz 3 übertragen wird. Dazu weist die Öffnung 16 einen dem Vielkeilprofilstift 9 entsprechenden Querschnitt auf.

Die Fig. 6 zeigt den Vielkeilprofilstift 9, der für die Drehmomentenübertragung vom Getriebe 2 auf den Drehkranz 3 sorgt. Der Vielkeilprofilstift 9 ist in einer Richtung federvorgespannt. Hierzu wird eine Feder 12 in axialer Verlängerung des Vielkeilprofilstifts 9 montiert, die von einem Federhut (Federzentrierung) 14 vorgespannt wird. Auf diese Weise wird erreicht, daß der Stift in axialer Richtung einseitig mit einer Federkraft vorgespannt ist. Ein - nicht dargestellter - Bund sorgt dafür, daß der Vielkeilprofilstift 9 trotzdem nicht in Federvorspannrichtung (entgegen der Pfeilrichtung, s. Fig. 6) weggedrückt wird. Eine zwischen dem Federende und dem Vielkeilprofilstift 9 angeordnete Kugel 17 entkoppelt die Feder 12 von Drehbewegungen des Vielkeilprofilstiftes 9. Die Kugel 17 und der Vielkeilprofilstift 9 sind dabei im Getriebe 2 geführt.

Sollte der Antriebsmotor 1 ausfallen, besteht mittels des vorbeschriebenen Aufbaus die Möglichkeit, mittels eines Hilfswerkzeugs 20, 20a, von dem in Fig.6 nur der vordere Bereich dargestellt ist, die Verriegelung der Verschließvorrichtung per Hand zu öffnen bzw. zu schließen. Das Hilfswerkzeug 20, 20a, das der Autofahrer im Bordwerkzeug mitführt, ist im wesentlichen ein Schraubendreher mit einem entsprechenden Vielkeilprofil als Drehansatz. Dieses Hilfswerkzeug 20, 20a wird axial fluchtend auf das Ende des Vielkeilprofilstiftes 9 (s. Fig. 2 oder 3) angesetzt. Dazu wird ein am vorderen Ende des Hilfswerkzeugs 20, 20a angeordneter Zapfen 19 in die entsprechende Bohrung 18 des Vielkeilprofilstiftes 9 gesteckt.

Durch Ausübung einer Druckkraft per Hand in Pfeilrichtung (Fig. 6) wird der Vielkeilprofilstift 9 aus seiner üblichen Arbeitsposition herausgedrückt und mit dem Drehkranz 3 außer Eingriff gebracht. Statt dessen kommt das Vielkeilprofil des Hilfswerkzeuges 20 mit der entsprechenden Vielkeilausnehmung in der Öffnung 16 des Drehkranzes 3 in Eingriff. Dann kann der Drehkranz 3 per Hand gedreht werden.

Bei einem zylindrisch ausgebildeten Drehansatz des Hilfswerkzeuges 20a erstreckt sich ein Zapfen 21 senkrecht zur Zylinderachse, wobei die Zapfenenden an beiden Seiten des Zylinders vorstehen (Fig. 6). Nach dem Hindurchführen des Hilfswerkzeuges 20a durch die mit entsprechenden Ausnehmungen (hier nicht dargestellt) versehene Öffnung 16 wird das Hilfswerkzeug 20a verdreht, so daß die Zapfenenden mit hier nicht dargestellten Anschlägen an der Rückseite des Teilkranzes 3a in Eingriff kommen, über die das Drehmoment übertragen wird.

Nach dem Herausziehen des Hilfswerkzeugs 20, 20a rutscht der Vielkeilprofilstift 9 wieder in die Öffnung 16 des Drehkranzes 3 hinein und dann so - nach Reparatur des Antriebsmotors 1 - den Drehkranz 3 wieder betätigen.

## Patentansprüche

1. Verschließvorrichtung für ein Schließbauteil eines Fahrzeugs, insbesondere für das Cabriolet-Verdeck eines Kraftfahrzeuges, die aufweist:
- mindestens einen Antriebsmotor (1), vorzugsweise einen Elektromotor, für die Betätigung der Verschließvorrichtung,
- ein Getriebe (2), das vorzugsweise mit dem Antriebsmotor (1) in baulicher Einheit ausgeführt ist, das mit dem Antriebsmotor (1) in Verbindung steht,
- einen im wesentlichen kreisrunden Drehkranz (3), der mit dem Getriebe (2) in Verbindung steht und von diesem in beiden Drehrichtungen um seine Mittelachse gedreht werden kann,
- ein Trägerblech (4), das zumindest den Drehkranz (3) trägt,
- mindestens eine Zug- und Druckstange (5), die mit ihrem einen Ende an dem Drehkranz (3) gelenkig gelagert ist, und
- mindestens einen Fanghaken (6), der mit dem anderen Ende der Zug- und Druckstange (5) in Verbindung steht und der in eine Öse zwecks Verriegelung eingreifen kann,
**dadurch gekennzeichnet, daß**
das Trägerblech (4) eine Bohrung (7) zur Aufnahme des Drehkranzes (3) an seinem äußeren Umfang und zu dessen radialer Lagerung aufweist, wobei der Durchmesser der Bohrung (7) dem Außendurchmesser des Drehkranzes (3) angepaßt ist, und
daß der Drehkranz (3) aus zwei Teilkränzen (3a, 3b) besteht, die miteinander fest verbunden sind,
wobei der erste Teilkranz (3a) eine derartige Form hat, daß er einerseits zwecks radialer Führung des Drehkranzes (3) an die Innenseite der Bohrung (7) des Trägerblechs (4) angrenzt und andererseits zwecks axialer Führung des Drehkranzes (3) an der einen Seite (4a) des Trägerblechs (4) anliegt, und
wobei der zweite Teilkranz (3b) eine im wesentlichen scheibenförmige Gestalt hat und dieser zwecks axialer Führung des Drehkranzes (3) an der anderen Seite (4b) des Trägerblechs (4) anliegt.

2. Verschließvorrichtung nach Anspruch 1, **dadurch gekennzeichnet, daß** im Bohrungsbereich (7) zwischen dem Trägerblech (4) und dem Drehkranz (3) ein ringförmiges Gleitlagerelement (8) angeordnet ist.

3. Verschließvorrichtung nach Anspruch 2, **dadurch gekennzeichnet, daß** das Gleitlagerelement (8) einen im wesentlichen U-förmigen Querschnitt aufweist.

4. Verschließvorrichtung nach Anspruch 2 oder 3, **dadurch gekennzeichnet, daß** das Gleitlagerelement (8) aus hochabriebfestem Kunststoffmaterial besteht.

5. Verschließvorrichtung nach einem der Ansprüche 1 bis 4, **dadurch gekennzeichnet, daß** die Verbindung zwischen Getriebe (2) und Drehkranz (3) zur Übertragung der Drehbewegung und des Drehmoments aus einem formschlüssigen Kupplungselement (9) besteht.

6. Verschließvorrichtung nach Anspruch 5, **dadurch gekennzeichnet, daß** das formschlüssige Kupplungselement (9) ein Vielkeilprofilstift ist.

7. Verschließvorrichtung nach Anspruch 5 oder 6, **dadurch gekennzeichnet, daß** das formschlüssige Kupplungselement (9) für eine Handbetätigung des Drehkranzes (3) mittels eines Hilfswerkzeuges (20, 20a) axial verschieblich ist, wobei ein Federelement (12) derart angeordnet ist, daß die axiale Verschiebung gegen seine Federkraft erfolgt, die eine Rückstellkraft bewirkt.

8. Verschließvorrichtung nach Anspruch 7, **dadurch gekennzeichnet, daß** das Federelement (12) unter Zwischenschaltung einer Kugel (17) an der dem Trägerblech (4) abgewandten Seite des Kupplungselements (9) anliegt.

9. Verschließvorrichtung nach Anspruch 7, **dadurch gekennzeichnet, daß** das Kupplungselement (9) derart ausgebildet ist, daß das Hilfswerkzeug (20) zum axialen Verschieben des Kupplungselements (9) auf dessen im Bereich des Drehkranzes (3) angeordneten Ende aufsetzbar und zur Übertragung eines Drehmoments auf den Drehkranz (3) mit diesem in Eingriff bringbar ist.

10. Verschließvorrichtung nach einem oder mehreren der Ansprüche 5-9, **dadurch gekennzeichnet daß** das im Bereich des Drehkranzes (3) angeordnete Ende des Kupplungselements (9) eine Bohrung (18) aufweist, die mit einem im Kontaktbereich des Hilfswerkzeugs (20) vorstehenden Zapfen (19) in Eingriff bringbar ist.

11. Verschließvorrichtung nach einem oder mehreren der Ansprüche 7-10, **dadurch gekennzeichnet, daß** der Querschnitt des vorderen Endes des Hilfswerkzeugs (20) im wesentlichen dem Querschnitt des Kupplungselements (9) entspricht.

12. Verschließvorrichtung nach einem oder mehreren der Ansprüche 7-11, **dadurch gekennzeichnet, daß** das Hilfswerkzeug (20a) an seinem vorderen Ende für eine Führung innerhalb der Öffnung (16) für das Kupplungselement (9) in dem Drehkranz (3) zylindrisch ausgebildet und mit einem senkrecht zur Zylinderachse, nämlich quer durch den Zylinder verlaufenden Zapfen (21) versehen ist, wobei die Zapfenenden an beiden Seiten des Zylinders vorstehen sowie in der Öffnung (16) des Drehkranzes (3) einander gegenüberliegende Aussparungen für den Durchgang der vorstehenden Zäpfenenden des Zapfens (21) d ausgebildet sind.

13. Verschließvorrichtung nach Anspruch 12, **dadurch gekennzeichnet, daß** die vorstehenden des Zaptens (21) des Hilfswerkzeugs (20a) mit auf der dem Getriebe (2) zugewandten Seite des Drehkranzes (3) angeordneten Anschlägen in Eingriff bringbar sind.

14. Verschließvorrichtung nach einem der Ansprüche 1 bis 13, **dadurch gekennzeichnet, daß** der Drehkranz (3) einen Fortsatz (13) aufweist, der so ausgeführt ist, daß er am Ende der Drehbewegung des Drehkranzes (3) beim Verriegeln der Verschließvorrichtung mit einem Anschlag (13a) am Trägerblech (4) und am Ende der entgegengesetzten Drehbewegung mit einem weiteren Anschlag (13b) am Trägerblech (4) in Eingriff kommt, wobei der Fortsatz (13) dazu geeignet ist, End- oder Mikroschalter zu betätigen, die den Antriebsmotor (1) ein- oder abschalten.

15. Verschließvorrichtung nach einem der Ansprüche 1 bis 14, **dadurch gekennzeichnet, daß** der Drehkranz (3) zwei um 180° gegeneinander versetzte Lagerpunkte (11) für je eine Zug- und Druckstange (5) aufweist.

16. Verschließvorrichtung nach Anspruch 15, **dadurch gekennzeichnet, daß** die Zug- und Druckstangen (5) an den Lagerpunkten (11) gelenkig angelenkt sind.

17. Verschlußvorrichtung nach einem der Ansprüche 1 bis 16, **dadurch gekennzeichnet, daß** die Drehachse des Antriebsmotors (1) und die Drehachse des Drehkranzes (3) senkrecht zueinander stehen.

## Claims

1. A closing apparatus for a closing assembly of a vehicle, in particular for the folding top of a convertible motor vehicle, comprising:
- at least one drive motor (1), preferably an electric motor, for operating the closing apparatus,
- a gear train (2), preferably forming an integral assembly with the drive motor (1), coupled with the drive motor (1),
- an essentially circular rotary disc (3) coupled with said gear train (2), and capable of being rotated thereby in both rotary directions about its center axis,
- a carrier frame (4) carrying at least the rotary disc (3),
- at least one tension and pressure rod (5) being articulated at one end with the rotary disc (3), and
- at least one catch hook (6) connected to the other end of the tension and pressure rod (5) and engageable with an eye for locking purposes,
**characterized in that**
the carrier frame (4) has a bore (7) for receiving the rotary disc (3) at its outer periphery and for radially bearing it, wherein the diameter of the bore (7) is matched to the outer diameter of the rotary disc (3), and
**in that** the rotary disc (3) consists of two partial rotary discs (3a, 3b) fixedly coupled with each other,
wherein the first partial rotary disc (3a) is formed in such a way that on the one hand, for the purposes of radial guidance of the rotary disc (3), it is adjacent to the inside of the bore (7) of the carrier frame (4) and on the other hand, for the purposes of axial guidance of the rotary disc (3), it is adjacent to one side (4a) of the carrier frame (4), and
wherein the second partial rotary disc (3b) is formed to be essentially disc shaped and, for the purposes of axial guidance of the rotary disc (3), it is adjacent to the other side (4b) of the carrier frame (4).

2. A closing apparatus according to claim 1, **characterized in that** in the area of the bore (7) an annular sliding bearing element (8) is arranged between the carrier frame (4) and the rotary disc (3).

3. A closing apparatus according to claim 2, **characterized in that** the sliding bearing element (8) has an essentially U-shaped cross section.

4. A closing apparatus according to claim 2 or claim 3, **characterized in that** the sliding bearing element (8) consists of a highly abrasion resistant plastics material.

5. A closing apparatus according to any one of claims 1 to 4, **characterized in that** the connection between the gear train (2) and the rotary disc (3) for transmitting the rotary motion and the torque consists of a positive clutch member (9).

6. A closing apparatus according to claim 4, **characterized in that** the positive clutch member (9) is a spline shaft.

7. A closing apparatus according to claim 5 or claim 6, **characterized in that** the positive clutch member (9) is axially displaceable by means of an accessory tool (20, 20a) for manual operation of the rotary disc (3), a spring member (12) being disposed in such a way that the axial displacement is carried out against its elastic force causing a restoring force.

8. A closing apparatus according to claim 7, **characterized in that** the spring member (12) is arranged, via an intermediary ball (17), against the side of the coupling member (9) facing away from the carrier frame (4).

9. A closing apparatus according to claim 7, **characterized in that** the coupling element (9) is formed in such a way that the accessory tool (20) for axially displacing the coupling element (9) may be set on the end thereof disposed in the area of the rotary disc (3), and may be brought into engagement with the rotary disc (3) for the transmission of a torque thereto.

10. A closing apparatus according to any one or more of claims 5 to 9, **characterized in that** the end of the coupling element (9) arranged in the area of the rotary disc (3) comprises a bore (18) capable of being brought into engagement with a stud (19) protruding in the contact area of the accessory tool (20).

11. A closing apparatus according to any one or more of claims 7 to 10, **characterized in that** the cross section of the front end of the accessory tool (20) essentially matches the cross section of the coupling element (9).

12. A closing apparatus according to any one or more of claims 7 to 11, **characterized in that** the accessory tool (20a) at its front end is cylindrically formed for guidance within the opening (16) for the coupling element (9) in the rotary disc (3), and provided with a pin (21) extending perpendicular to the cylinder axis, i.e. in a transverse direction through the cylinder, the pin ends protruding on both sides of the cylinder, opposite recesses being formed in the opening (16) of the rotary disc (3) for passage therethrough of the protruding pin ends of the pin (21).

13. A closing apparatus according to claim 12, **characterized in that** the protruding pin ends of the pin (21) extending in a transverse direction through the cylinder of the accessory tool (20a) may be brought into engagement with stops arranged on the side of the rotary disc (3) facing the gear train (2).

14. A closing apparatus according to any one of claims 1 to 13, **characterized in that** the rotary disc (3) comprises a protrusion (13) formed in such a way that, at one end of the rotary motion of the rotary disc (3) at the locking action of the closing apparatus, it comes into engagement with a stop (13a) on the carrier frame (4) and, at the end of the opposite rotary motion, it comes into engagement with a further stop (13b) on the carrier frame (4), the protrusion (13) being suitable for operating end or micro switches switching the drive motor (1) on or off.

15. A closing apparatus according to any one of claims 1 to 14, **characterized in that** the rotary disc (3) has two bearing points (11) offset from each other by 180°, one each for one tension and pressure rod (5).

16. A closing apparatus according to claim 15, **characterized in that** the tension and pressure rods (5) are articulated at the bearing points (11).

17. A closing apparatus according to any one of claims 1 to 16, **characterized in that** the rotary axis of the drive motor (1) and the rotary axis of the rotary disc (3) are perpendicular to each other.

## Revendications

1. Dispositif de fermeture pour un élément de fermeture d'un véhicule, en particulier pour la capote décapotable d'un véhicule, qui présente :
- au moins un moteur de commande (1), de préférence un moteur électrique, pour l'actionnement du dispositif de fermeture,
- un engrenage (2), qui est réalisé de préférence avec un moteur de commande (1) en une unité de construction, qui est en relation avec le moteur de commande (1),
- une couronne de rotation (3) substantiellement circulaire qui est en relation avec l'engrenage (2) et qui peut être tournée par celui-ci autour de son axe central dans les deux sens de rotation,
- une tôle porteuse (4) qui porte au moins la couronne de rotation (3),
- au moins une tige de traction et de pression (5) qui est positionnée articulée sur la couronne de rotation (3) avec l'une de ses extrémités et
- au moins un crochet d'attache (6) qui est en relation avec l'autre extrémité de la tige de traction et de pression (5) et qui peut s'engrener dans un oeillet pour verrouillage,
**caractérisé en ce que**
la tôle porteuse (4) présente une forure (7) pour recevoir la couronne de rotation (3) sur sa périphérie extérieure et pour son positionnement radial, le diamètre de la forure (7) étant adapté au diamètre extérieur de la couronne de rotation (3) et
que la couronne de rotation (3) se compose de deux couronnes partielles (3a, 3b) qui sont reliées fixement l'une à l'autre,
la première couronne partielle (3a) ayant une forme telle qu'elle est adjacente à la face intérieure de la forure (7) de la tôle porteuse (4) d'une part pour un guidage radial de la couronne de rotation (3) et à l'un des côtés (4a) de la tôle porteuse (4) d'autre part pour un guidage axial de la couronne de rotation (3) et
la seconde couronne partielle (3b) ayant une configuration substantiellement en forme de disque et celle-ci étant adajcente à l'autre côté (4b) de la tôle porteuse (4) pour un guidage axial de la couronne de rotation (3).

2. Dispositif de fermeture selon la revendication 1, **caractérisé en ce qu'**un élément de palier à glissement en forme d'anneau (8) est placé dans la zone de la forure (7) entre la tôle porteuse (4) et la couronne de rotation (3).

3. Dispositif de fermeture selon la revendication 2, **caractérisé en ce que** l'élément de palier à glissement (8) présente une section substantiellement en forme d'U.

4. Dispositif de fermeture selon la revendication 2 ou 3, **caractérisé en ce que** l'élément de palier à glissement (8) est en matériau plastique très résistant à l'usure.

5. Dispositif de fermeture selon l'une des revendications 1 à 4, **caractérisé en ce que** la liaison entre l'engrenage (2) et la couronne de rotation (3) pour la transmission du mouvement de rotation et du couple de rotation est constituée par un élément d'accouplement craboté (9).

6. Dispositif de fermeture selon la revendication 5, **caractérisé en ce que** l'élément d'accouplement craboté (9) est une cheville profilée à clavettes multiples.

7. Dispositif de fermeture selon la revendication 5 ou 6, **caractérisé en ce que** l'élément d'accouplement craboté (9) est mobile axialement pour un actionnement manuel de la couronne de rotation (3) à l'aide d'un outil auxiliaire (20, 20a), un élément à ressort (12) étant placé de telle manière que le déplacement axial a lieu contre sa force de ressort qui provoque une force de rappel.

8. Dispositif de fermeture selon la revendication 7, **caractérisé en ce que** l'élément de ressort (12) repose sur le côté de l'élément d'accouplement (9) qui est détourné de la tôle porteuse (4) en intercalant une bille (17).

9. Dispositif de fermeture selon la revendication 7, **caractérisé en ce que** l'élément d'accouplement (9) est configuré de telle manière que l'outil auxiliaire (20) pour le déplacement axial de l'élément d'accouplement (9) peut être posé sur l'extrémité de celui-ci placée dans la zone de la couronne de rotation (3) et peut être amené en prise avec la couronne de rotation (3) pour transmettre un couple de rotation à celle-ci.

10. Dispositif de fermeture selon l'une ou plusieurs des revendications 5 à 9, **caractérisé en ce que** l'extrémité de l'élément d'accouplement (9) qui est placée dans la zone de la couronne de rotation (3) présente une forure (18) qui peut être amenée en prise avec un tourillon (19) qui fait saillie dans la zone de contact de l'outil auxiliaire (20).

11. Dispositif de fermeture selon l'une ou plusieurs des revendications 7 à 10, **caractérisé en ce que** la section de l'extrémité antérieure de l'outil auxiliaire (20) correspond substantiellement à la section de l'élément d'accouplement (9).

12. Dispositif de fermeture selon l'une ou plusieurs des revendications 7 à 11, **caractérisé en ce que** l'outil auxiliaire (20a) est configuré cylindrique à son extrémité antérieure pour un guidage à l'intérieur de l'ouverture (16) pour l'élément d'accouplement (9) dans la couronne de rotation (3) et est pourvu d'un tourillon (21) qui est perpendiculaire à l'axe du cylindre, à savoir transversalement à travers le cylindre, les extrémités du tourillon faisant saillie des deux côtés du cylindre et des réservations opposées l'une à l'autre étant configurées dans l'ouverture (16) de la couronne de rotation (3) pour le passage des extrémités faisant saillie du tourillon (21).

13. Dispositif de fermeture selon la revendication 12, **caractérisé en ce que** les extrémités qui font saillie du tourillon (21) de l'outil auxiliaire (20a), tourillon qui passe transversalement à travers le cylindre, peuvent être mises en prise avec des butées sur le côté de la couronne de rotation (3) qui est tourné vers l'engrenage (2).

14. Dispositif de fermeture selon l'une des revendications 1 à 13, **caractérisé en ce que** la couronne de rotation (3) présente un prolongement (13) qui est conçu de telle manière qu'il vient en prise à la fin du mouvement de rotation de la couronne de rotation (3) lors du verouillage du dispositif de fermeture avec une butée (13a) sur la tôle porteuse (4) et à la fin du mouvement de rotation opposée avec une autre butée (13b) sur la tôle porteuse (4), le prolongement (13) étant approprié pour actionner des commutateurs de fin de course ou des commutateurs miniatures qui mettent en marche ou arrêtent le moteur de commande (1).

15. Dispositif de fermeture selon l'une des revendications 1 à 14, **caractérisé en ce que** la couronne de rotation (3) présente deux points d'appui (11) déclaés de 180° l'un par rapport à l'autre pour respectivement une tige de traction· et de pression (5) chaque.

16. Dispositif de fermeture selon la revendication 15, **caractérisé en ce que** les tiges de traction et de pression (5) sont articulées de manière articulée aux points d'appui (11).

17. Dispositif de fermeture selon l'une des revendications 1 à 16, **caractérisé en ce que** l'axe de rotation du moteur de commande (1) et l'axe de rotation de la couronne de rotation (3) sont perpendiculaires l'un à l'autre.
